# EUROPÄISCHE PATENTSCHRIFT

(11) **EP 1 866 612 B1**
(45) Veröffentlichungstag und Bekanntmachung des Hinweises auf die Patenterteilung: **09.08.2017**
(21) Anmeldenummer: 06725067.0
(22) Anmeldetag: 15.03.2006
(51) Int. Cl.: G01F 23/296, G01N 9/00, G01N 11/16

(54) **VORRICHTUNG ZUR BESTIMMUNG UND/ODER ÜBERWACHUNG EINER PROZESSGRÖSSE EINES MEDIUMS**
DEVICE FOR DETERMINING AND/OR MONITORING A PROCESS VARIABLE OF A MEDIUM
DISPOSITIF POUR DETERMINER ET/OU CONTROLER UNE VARIABLE DE PROCEDE D'UN MILIEU

(30) Priorität: 04.04.2005 DE 102005015547
(43) Veröffentlichungstag der Anmeldung: 19.12.2007
(73) Patentinhaber: Endress u. Hauser GmbH u.Co. KG, 79689 Maulburg (DE)
(72) Erfinder: MÜLLER, Alexander, 79361 Sasbach-Jechtingen (DE)
(74) Vertreter: Andres, Angelika Maria
(86) Internationale Anmeldenummer: PCT/EP2006/060742
(87) Internationale Veröffentlichungsnummer: WO 2006/106028

(56) Entgegenhaltungen:
- EP-A- 0 209 872
- DE-A1- 10 237 931
- US-A- 5 844 491
- US-A1- 2004 078 164

## Beschreibung

Die Erfindung bezieht sich auf eine Vorrichtung zur Bestimmung und/oder Überwachung mindestens einer Prozessgröße eines Mediums, mit mindestens einer mechanisch schwingfähigen Einheit, mit einer Antriebs-/Empfangseinheit, welche die mechanisch schwingfähige Einheit ausgehend von einem elektrischen Anregesignal (Sa) zu mechanischen Schwingungen anregt, und welche die mechanischen Schwingungen der mechanisch schwingfähigen Einheit empfängt und in ein elektrisches Empfangssignal (Se) umwandelt, und mit einer Elektronikeinheit, welche ausgehend vom elektrischen Empfangssignal (Se) das elektrische Anregesignal (Sa) erzeugt und an die Antriebs-/Empfangseinheit übergibt, wobei die Elektronikeinheit derartig ausgestaltet ist, dass sie das Anregesignal (Sa) derartig erzeugt, dass zwischen dem Anregesignal (Sa) und dem Empfangssignal (Se) eine vorgebbare Phasendifferenz besteht. Bei dem Medium handelt es sich beispielsweise um eine Flüssigkeit oder um ein Schüttgut. Bei der Prozessgröße handelt es sich beispielsweise um den Füllstand, die Dichte oder die Viskosität des Mediums.

Messgeräte zur Bestimmung von Prozessgrößen unter Ausnutzung der mechanischen Schwingungen einer schwingfähigen Einheit sind bereits bekannt. Meist werden diese als sog. Grenzstandschalter verwendet. Beschrieben ist beispielsweise eine Ausgestaltung in der internationalen Patentanmeldung WO 2004/018974 der Anmelderin.

Die mechanisch schwingfähige Einheit eines solchen Messgerätes besteht aus zumindest einem Schwingelement - dann handelt es sich um einen sog. Einstab - oder aus zwei Schwingelementen - dann handelt es sich um eine sog. Schwinggabel -, die an einer Membran befestigt sind. Die Schwingungserzeugung und -detektion geschieht üblicherweise über ein piezoelektrisches Element, welches die Umwandlung zwischen der mechanischen Schwingung und einer elektrischen Wechselspannung und umgekehrt vornimmt. Das piezoelektrische Element bildet also die Anrege-/Empfangseinheit des Messgerätes. Für die Anregung wird die Anrege-/Empfangseinheit mit einem Anregesignal Sa - meist eine elektrische Wechselspannung - beaufschlagt. Umgekehrt erzeugt die Einheit aus den mechanischen Schwingungen ein Empfangssignal Se. Aus der Frequenz fe, der Amplitude und der Phase des Empfangssignals Se relativ zum Anregesignal Sa kann beispielsweise auf den Füllstand, die Dichte oder die Viskosität des Mediums geschlossen werden. Ist eine dieser Größen von anderen Prozessgrößen abhängig, ist beispielsweise die Viskosität von der Temperatur abhängig, so kann auch auf zusätzliche Prozessgrößen geschlossen werden.

Je nach der Beschaffenheit es Mediums sind unterschiedliche Phasendifferenzen zwischen dem Anregesignal Sa und dem Empfangssignal Se vorteilhaft. So hat es sich gezeigt, dass bei hochviskosen Medien eine Differenz von annährend 70° sinnvoll sind, und dass die Detektion von Schaum ermöglicht wird durch eine Phase von ca. 120°. Da das Anregesignal von einer Elektronikeinheit in der Messvorrichtung ausgehend vom Empfangssignal erzeugt wird, ist es möglich, die Phase des Anregesignals passend einzustellen, so dass sich die erforderliche Phasendifferenz ergibt. Eine Möglichkeit, dies digital zu realisieren, ist in der oben genannten Offenlegungsschrift WO 2004/018974 diskutiert.

Besonders hochviskose Medien bringen jedoch auch eine Problematik mit sich, welche darin besteht, dass durch sie die Schwingungen der schwingfähigen Einheit eine hohe Dämpfung erfahren. Deshalb ist es erforderlich, dass die Frequenz fa des Anregesignals Sa möglichst genau gleich der Frequenz fe des Empfangssignals Se ist, da bei Abweichungen die Schwingungen abreißen können. Wie die Frequenz digital bestimmt werden kann, ist ebenfalls in der obigen Schrift WO 2004/018974 beschrieben.

Das in der Schrift WO 2004/018974 diskutierte Verfahren der Grundwellenanregung hat jedoch zwei Nachteile, die vor allem eine Anwendung in hochviskosen Medien erschweren: Eine - sozusagen statische - Schwierigkeit besteht in der Digitalisierung der Frequenz, bei welcher die Genauigkeit durch die Auflösung des verwendeten Mikroprozessors gegeben ist. Dadurch ergibt sich eine Abweichung von der eigentlichen Frequenz, was zu einem Abreißen der Schwingungen führen kann. Weiterhin besteht ein - sozusagen dynamisches - Problem darin, dass die Frequenz durch die Auswertung der Flanken des Empfangssignals Se und ggf. auch über eine Mittlung von mehreren Perioden erfolgt. Bei hochviskosen Medien und einer graduell sich ändernden Bedeckung der schwingfähigen Einheit durch das Medium kann es jedoch vorkommen, dass sich die Schwingungsfrequenz von einer Halbperiode zur anderen ändert. Dies führt jedoch dazu, dass das Anregesignal Sa zwangsläufig die unpassende Frequenz trägt. Beide Probleme ließen sich prinzipiell durch eine Erhöhung der Rechenleistung des verwendeten Mikroprozessors ausgleichen, was jedoch zu einer unverhältnismäßigen Kostenerhöhung des Endproduktes führen würde.

US5844491 und US2004/078164 sind weitere Beispiele von bekannten Vorrichtungen zur Bestimmung der Prozessgröße eines Mediums anhand eines mechanisch schwingenden Elements.

Die Aufgabe der Erfindung besteht somit darin, eine Einstellung der Phasendifferenz zwischen Anrege- und Empfangssignal vorzunehmen, welche eine Anwendung des Messgerätes auch in hochviskosen Medien erlaubt.

Die Aufgabe wird erfindungsgemäß durch eine Vorrichtung gemäß dem Anspruch 1 gelöst, nämlich dadurch, dass in der Elektronikeinheit mindestens ein analoger Allpass zur Einstellung der Phasendifferenz vorgesehen ist. Unter einem Allpass ist eine elektronische Einheit zu verstehen, welche in Abhängigkeit von der Frequenz die Phase eines elektrischen Signals ändert, ohne Einfluss auf die Amplitude des Signals zu nehmen. Ein Allpass lässt sich insbesondere derartig steuern oder regeln, dass die Phase des elektrischen Signals einstellbar ist. Allpässe sind der fachlich qualifizierten Person aus dem Stand der Technik bestens vertraut. Bei Allpässen handelt es sich allgemein um Schaltungen, deren Verstärkung konstant ist, die aber eine frequenzabhängige Phasenverschiebung verursachen. In der erfindungsgemäßen Vorrichtung befindet sich also in der Elektronikeinheit, die für die Rückkopplung sorgt, ein Allpass zur Einstellung der Phase des Anregesignals und somit zur Einstellung der Phasendifferenz zwischen dem Anrege- und dem Empfangssignal.

Erfindungsgemäß handelt es sich bei dem Allpass um einen analogen Allpass. Ein analoger Allpass hat den großen Vorteil, dass es keine Probleme mit dem Grad der Auflösung geben kann. Somit kann es durch die Abtastung also nicht zu einer Frequenzverschiebung kommen. Die Genauigkeit, die bei der digitalen Ausgestaltung also nur mit erhöhtem Aufwand erreicht werden kann, ist bei der analogen Ausgestaltung automatisch und implizit gegeben. Hierin zeigt sich also der Vorteil der Analogtechnik. Die Erfindung besteht also darin, dass der Teil, der für die Einstellung der Phasendifferenz erforderlich ist, durch Analogtechnik realisiert wird. Vorteilhafterweise wird das Empfangssignal Se nur gefiltert und/oder verstärkt und dann dem Allpass zugeführt, so dass also das eigentliche Empfangssignal Se verarbeitet und dem Allpass rückgeführt wird. Dies geschieht vornehmlich nur durch analoge Bauteile.

Erfindungsgemäß ist mindestens eine Regeleinheit vorgesehen, welche den Allpass derartig regelt oder steuert, dass die Phasendifferenz zwischen dem Anregesignal (Sa) und dem Empfangssignal (Se) im Wesentlichen einem vorgegebenen Sollwert entspricht. Die Regeleinheit regelt den Allpass und stellt ihn entsprechend den Erfordernissen ein. So wird bei hochviskosen Medien die Phasendifferenz beispielsweise auf 70° eingestellt, für die Detektion von Schaum jedoch auf 120°. Der Sollwert ist von der Art der Anwendung und von der Beschaffenheit des Mediums abhängig. Die Regeleinheit kann vorteilhafterweise digital ausgestaltet sein, um somit für die Einstellung der Phase die Vorteile der Digitaltechnik zu verwenden, um also digital den analogen Allpass zu betreiben. Für diese Reglung wird das Empfangssignal der Regeleinheit zugeführt und dort zumindest in Bezug auf die Frequenz ausgewertet.

Erfindungsgemäß ist der Regeleinheit mindestens eine Speichereinheit zugeordnet, in welcher mindestens ein Korrekturwert für die Phasendifferenz in Abhängigkeit von einer Empfangsfrequenz (fe) des Empfangssignals (Se) abgelegt ist.

Die Regeleinheit steuert oder regelt den Allpass also in Abhängigkeit von mindestens einem oder mehreren in einer Speichereinheit abgelegten Korrekturwerten. Vorzugsweise ist der Phase-Frequenz-Verlauf des Allpasses zumindest abschnittsweise in der Speichereinheit hinterlegt. Somit greift die Regeleinheit also auf Werte zurück, die eine optimale Steuerung des Allpasses und somit eine optimale Einstellung der Phasendifferenz erlauben. Handelt es sich um mehrere Korrekturwerte, so können diese beispielsweise tabellarisch in der Speichereinheit hinterlegt sein. Die Frequenz fe des Empfangssignals Se ist dann auch vorzugsweise die Anregefrequenz fa des Anregesignals Sa.

Eine Ausgestaltung beinhaltet, dass die Regeleinheit derartig ausgestaltet und mit der Anrege-/Empfangseinheit verbunden ist, dass die Regeleinheit das Empfangssignal (Se) zumindest in Hinsicht auf die Phase auswertet. Die Regeleinheit bestimmt also die Phase des Empfangssignals (Se). Für die Bestimmung der Phase durch die Regeleinheit ist es somit vorteilhaft, wenn die Regeleinheit digital ausgestaltet ist, um beispielsweise schnell und möglichst genau die Phase bestimmen zu können.

Eine Ausgestaltung sieht vor, dass die Regeleinheit das Anregesignal Sa zumindest in Hinsicht auf die Phase und/oder die Frequenz auswertet. Das Ausgangssignal Sa wird der Regeleinheit rückgeführt und kann dort für die Steuerung/Regelung des Allpasses verwendet werden. Von der Regeleinheit wird der Allpass also zunächst eingestellt und die Auswertung des daraus sich ergebenden Anregesignals erlaubt eine genauere Einstellung und Steuerung des Allpasses. Die Regeleinheit empfängt somit sowohl das Empfangssignal Se, als auch das Anregesignal Sa, und wertet beide Signale entsprechend aus.

Eine Ausgestaltung beinhaltet, dass die Regeleinheit den Allpass anhand zumindest der Frequenz (fe) des Empfangssignal (Se), sowie der Phase des Empfangssignals (Se) und/oder der Frequenz und/oder der Phase des Anregesignal (Sa) regelt oder steuert. Die Regeleinheit wertet somit das Empfangssignal und das Anregesignal derartig aus, dass über den Allpass das optimale Anregesignal erzeugt wird.

Eine Ausgestaltung sieht vor, dass in der Regeleinheit mindestens ein Mikrocontroller vorgesehen ist. Die Regeleinheit selbst ist erfindungsgemäß digital ausgestaltet, wohingegen die Bestandteile der Vorrichtung, die wesentlich für die Einstellung der Frequenz sind, analog ausgelegt sind. Somit ist also der Teil der Vorrichtung digital, der sich nicht negativ auf die Frequenz auswirken kann. Ein Vorteil der digitalen Realisierung ist, dass die oben bezeichneten Korrekturwerte leichter umgesetzt werden können und dass somit der Regeleinheit auch eine Intelligenz mitgegeben werden kann, die eine leichtere Adaption an die Messbedingungen erlaubt. Vorzugsweise wird also das Empfangssignal (Se) verstärkt, d.h. ohne Änderung der Frequenz dem Allpass zugeführt und die Phase wird dann durch die Steuerung/Regelung von der Regeleinheit eingestellt. Die Vorrichtung ist als Ganzes also teils analog, teils digital ausgestaltet.

Die Erfindung wird anhand der nachfolgenden Zeichnungen näher erläutert. Es zeigt:
Fig. 1: eine schematische Darstellung der erfindungsgemäßen Vorrichtung,
Fig. 2: eine detaillierte Darstellung der wesentlichen elektronischen Einheiten in Blockschaltform, und
Fig. 3: eine beispielhafte Ausgestaltung eines Allpasses.

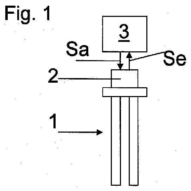

Fig. 1 zeigt den prinzipiellen Aufbau einer erfindungsgemäßen Vorrichtung. Bei der mechanisch schwingfähigen Einheit 1 handelt es sich in diesem Fall um eine Schwinggabel, bestehend aus zwei Schwingelementen, die an einer Membran befestigt sind. Oberhalb der Membran und somit an der mechanisch schwingfähigen Einheit 1 ist die Antriebs-/Empfangseinheit 2 angebracht, welche die schwingfähige Einheit 1 zu Schwingungen anregt, bzw. die deren Schwingungen empfängt und in ein elektrisches Empfangssignal Se umwandelt. Dabei handelt es sich zumeist um eine elektrische Wechselspannung mit der Empfangsfrequenz fe, die der Frequenz der Schwingungen der mechanisch schwingfähigen Einheit 1 entspricht. Die Frequenz fe, die Amplitude und auch die Phase des Empfangssignals Se relativ zum Anregesignal Sa sind beispielsweise abhängig vom Grad der Bedeckung der mechanisch schwingfähigen Einheit 1 durch das - hier nicht dargestellte - Medium und auch durch die Viskosität oder die Dichte des Mediums. Letztere Abhängigkeiten setzen einen gewissen Grad der Bedeckung voraus. Die Elektronikeinheit 3 verstärkt das Empfangssignal Se und führt es der Antriebs-/Empfangseinheit 2 als Anregesignal Sa wieder zu. Der Resonanzkreis wird also rückgekoppelt. Je nach der Beschaffenheit des Mediums müssen bestimmte Phasendifferenzen zwischen dem Empfangs- Se und dem Anregesignal Sa gegeben sein. So ist bei hochviskosen Medien eine Phasendifferenz von ca. 70° wichtig. Die Anregefrequenz fa des Anregesignals Sa ist im Wesentlichen identisch der Empfangsfrequenz fe des Empfangssignals Se, aber die Phase des Anregesignals Sa ist so eingestellt, dass ein vorgegebener und von der Anwendung und der Beschaffenheit des Mediums abhängiger Sollwert für die Phasendifferenz bzw. für die Summe aller Phasen im Resonanzkreis erreicht wird.

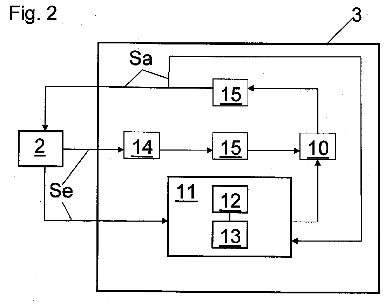

Fig. 2 zeigt als Blockschaltbild die wesentlichen Elektronikbestandteile einer beispielhaften Ausgestaltung der erfindungsgemäßen Vorrichtung. Die Anrege-/Empfangseinheit 2 übergibt in der hier gezeigten Ausführung das Empfangssignal Se zweimal an die Elektronikeinheit 3. Das Signal Se wird direkt an einen Bandpass 14 übergeben, welcher das Rauschen limitiert und auch das Signal Se um Fremdvibrationen vermindert. Anschließend wird das Signal von einem Verstärker 15 verstärkt und auf den Allpass 10 gegeben. Dort passiert die Anpassung der Phase, so dass der Sollwert der Phasendifferenz erreicht wird. Anschließend wird das Signal wieder auf einen Verstärker 15 gegeben und verlässt dann die Elektronikeinheit 3 als das Anregesignal Sa. Gleichzeitig wird das Anregesignal Sa jedoch auch der Regeleinheit 11 zugeführt. Die Einheiten 14, 15 und 10 sind analog ausgeführt, so dass die Frequenz fa des Anregesignals Sa gleich der Frequenz fe des Empfangssignals Se ist. Es werden keine Bauteile verwendet, die zu einer Frequenzverschiebung führen und es werden vor allem keine digitalen Bauteile verwendet, deren Auflösung die Genauigkeit der Übereinstimmung der beiden Frequenzen fe und fa beeinflussen. Der Allpass 10 wird durch die Regeleinheit 11 gesteuert oder geregelt. Dafür wird das Empfangssignal Se auf die Regeleinheit 11 gegeben, so dass dort beispielsweise der Mikroprozessor 13 die Phase des Empfangssignals Se bestimmen kann. In der Speichereinheit 12 sind die entsprechenden Sollwerte für die Phasendifferenz zwischen Empfangssignal Se und Anregesignal Sa abgelegt. Die Sollwerte sind z.B. davon abhängig, ob auch Medien mit hoher Viskosität detektiert werden sollen oder ob auch Schaum erkannt werden soll. Weiterhin sind in der Speichereinheit 12 die passenden Korrekturwerte für die Einstellung des Allpasses 10 hinterlegt. Diese Regeleinheit 11 führt also dazu, dass das Anregesignal Sa durch den Allpass 10 immer die notwendige Phase bekommt, so dass die Schwingungen beispielsweise bei hochviskosen Medien nicht abreißen. Durch die Rückkopplung des Anregesignals Sa zur Regeleinheit 11 und die dortige Auswertung des Anregesignals Sa in Bezug auf die Frequenz und die Phase wird die Regelung des Allpasses 10 verbessert. Weiterhin wird durch die analogen Bauteile gewährleistet, dass es keine negative Beeinflussung der Frequenz gibt, dass also die Anregefrequenz fa gleich der Empfangsfrequenz ist.

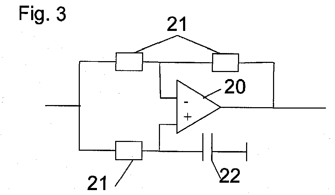

In der Fig. 3 ist eine konkrete Ausgestaltung eines Allpasses 10 dargestellt. Es handelt sich um einen Allpass erster Ordnung, besteht aus einem Operationsverstärker 20, drei Widerständen 21 und einem Kondensator 22.

### Bezugszeichenliste

**Tabelle 1**

| | |
|---|---|
| 1 | Mechanisch schwingfähige Einheit |
| 2 | Antriebs-/Empfangseinheit |
| 3 | Elektronikeinheit |
| 10 | Allpass |
| 11 | Regeleinheit |
| 12 | Speichereinheit |
| 13 | Mikrocontroller |
| 14 | Bandpass |
| 15 | Verstärker |
| 20 | Operationsverstärker |
| 21 | Widerstand |
| 22 | Kondensator |

## Patentansprüche

1. Vorrichtung zur Bestimmung und/oder Überwachung mindestens einer Prozessgröße eines Mediums,
mit mindestens einer mechanisch schwingfähigen Einheit (1),
mit einer Antriebs-/Empfangseinheit (2), welche die mechanisch schwingfähige Einheit (1) ausgehend von einem elektrischen Anregesignal (Sa) zu mechanischen Schwingungen anregt, und welche die mechanischen Schwingungen der mechanisch schwingfähigen Einheit (1) empfängt und in ein elektrisches Empfangssignal (Se) umwandelt, und
mit einer Elektronikeinheit (3), welche ausgehend vom elektrischen Empfangssignal (Se) das elektrische Anregesignal (Sa) erzeugt und an die Antriebs-/Empfangseinheit (2) übergibt,
wobei die Elektronikeinheit (3) derartig ausgestaltet ist, dass sie das Anregesignal (Sa) derartig erzeugt, dass zwischen dem Anregesignal (Sa) und dem Empfangssignal (Se) eine vorgebbare Phasendifferenz besteht, **dadurch gekennzeichnet,**
**dass** in der Elektronikeinheit (3) mindestens ein Allpass (10) zur Einstellung der Phasendifferenz vorgesehen ist,
**dass** mindestens eine Regeleinheit (11) vorgesehen ist, welche den Allpass (10) derartig regelt oder steuert, dass die Phasendifferenz zwischen dem Anregesignal (Sa) und dem Empfangssignal (Se) im Wesentlichen einem vorgegebenen Sollwert entspricht,
**dass** der Regeleinheit (11) weiterhin mindestens eine Speichereinheit (12) zugeordnet ist, in welcher mindestens ein Korrekturwert für die Phasendifferenz in Abhängigkeit von der Empfangsfrequenz (fe) des Empfangssignals (Se) abgelegt ist, und dass die Regeleinheit den Allpass in Abhängigkeit von dem mindestens einen Korrekturwert regelt oder steuert, dass es sich bei dem Allpass (10) um einen analogen Allpass handelt, und dass die Regeleinheit (11) digital ausgestaltet ist.

2. Vorrichtung nach Anspruch 1,
**dadurch gekennzeichnet,**
**dass** die Regeleinheit (11) derartig ausgestaltet und mit der Anrege-/Empfangseinheit (2) verbunden ist, dass die Regeleinheit (11) das Empfangssignal (Se) zumindest in Hinsicht auf die Phase auswertet.

3. Vorrichtung nach Anspruch 1 oder 2, **dadurch gekennzeichnet,**
**dass** die Regeleinheit (11) das Anregesignal (Sa) zumindest in Hinsicht auf die Phase und/oder die Frequenz auswertet.

4. Vorrichtung nach Anspruch 2 oder 3, **dadurch gekennzeichnet,**
**dass** die Regeleinheit (11) den Allpass (10) anhand zumindest der Frequenz (fe) des Empfangssignals (Se), sowie der Phase des Empfangssignals (Se) und/oder der Frequenz und/oder der Phase des Anregesignal (Sa) regelt oder steuert.

5. Vorrichtung nach Anspruch 1, **dadurch gekennzeichnet,**
**dass** in der Regeleinheit (11) mindestens ein Mikrocontroller (13) vorgesehen ist.

## Claims

1. Apparatus for determining and/or monitoring at least one process variable of a medium,
with at least one unit capable of mechanical vibration (1),
with a drive/reception unit (2) which causes the unit capable of mechanical vibration (1) to perform mechanical vibrations on the basis of an electrical excitation signal (Sa), and which receives the mechanical vibrations of the unit capable of mechanical vibration (1) and converts them to an electrical reception signal (Se), and
with an electronics unit (3), which generates the electrical signal (Sa) on the basis of the electrical reception signal (Se) and transmits the signal to the drive/reception unit (2),
wherein the electronics unit (3) is designed in such a way that it generates the excitation signal (Sa) in such a way that a predefinable phase difference exists between the excitation signal (Sa) and the reception signal (Se),
**characterized in that**
at least one all-pass filter (10) is provided in the electronics unit (3) to set the phase difference,
at least one control unit (11) is provided, said control unit serving to control or regulate the all-pass filter (10) in such a way that the phase difference between the excitation signal (Sa) and the reception signal (Se) essentially corresponds to a predefined target value,
**in that**, furthermore, at least one memory unit (12) is assigned to the control unit (11), wherein at least one correction value for the phase difference is stored in said memory unit depending on the reception frequency (fe) of the reception signal (Se), and **in that** the control unit regulates or controls the all-pass filter depending on the at least one correction value,
**in that** the all-pass filter (10) is an analog all-pass filter and **in that** the control unit (11) is designed in a digital manner.

2. Apparatus as claimed in Claim 1,
**characterized in that**
the control unit (11) is designed in such a way and connected with the excitation/reception unit (2) in such a way that the control unit (11) evaluates the reception signal (Se) at least with regard to the phase.

3. Apparatus as claimed in Claim 1 or 2,
**characterized in that**
the control unit (11) evaluates the excitation signal (Sa) at least with regard to the phase and/or frequency.

4. Apparatus as claimed in Claim 2 or 3,
**characterized in that**
the control unit (11) regulates or controls the all-pass filter (10) using at least the frequency (fe) of the reception signal (Se) as well as the phase of the reception signal (Se) and/or the frequency and/or the phase of the excitation signal (Sa).

5. Apparatus as claimed in Claim 1,
**characterized in that**
at least one microcontroller (13) is provided in the control unit (11).

## Revendications

1. Dispositif destiné à la détermination et/ou la surveillance d'au moins une grandeur process d'un produit,
avec au moins une unité mécanique apte à vibrer (1),
avec une unité d'excitation / de réception (2), qui excite en vibrations mécaniques l'unité mécanique apte à vibrer (1) à partir d'un signal d'excitation électrique (Sa), et qui reçoit les vibrations mécaniques de l'unité mécanique apte à vibrer (1) et les convertit en un signal de réception électrique (Se),
avec une unité électronique (3), qui génère à partir du signal de réception électrique (Se) le signal d'excitation électrique (Sa) et le transmet à l'unité d'excitation / de réception (2),
pour lequel l'unité électronique (3) est conçue de telle sorte à générer le signal d'excitation (Sa) afin d'obtenir entre le signal d'excitation (Sa) et le signal de réception (Se) une différence de phase prédéfinissable,
**caractérisé**
**en ce qu'**est prévu, dans l'unité électronique (3), au moins un filtre passe-tout (10) destiné au réglage de la différence de phase,
**en ce qu'**est prévue au moins une unité de régulation (11), laquelle régule ou commande le filtre passe-tout (10) de telle sorte que la différence de phase entre le signal d'excitation (Sa) et le signal de réception (Se) corresponde pour l'essentiel à une valeur de consigne prédéfinie,
**en ce qu'**est attribuée en outre à l'unité de régulation (11) au moins une unité de mémoire (12), dans laquelle est enregistrée au moins une valeur de correction pour la différence de phase en fonction de la fréquence de réception (fe) du signal de réception (Se), et en ce que l'unité de régulation régule ou commande le filtre passe-tout en fonction de l'au moins une valeur de correction,
**en ce qu'**il s'agit, concernant le filtre passe-tout (10), d'un filtre passe-tout analogique et en ce que l'unité de régulation (11) est conçue de façon numérique.

2. Dispositif selon la revendication 1,
**caractérisé**
**en ce que** l'unité de régulation (11) est conçue et reliée avec l'unité d'excitation / de réception de telle sorte que l'unité de régulation (11) évalue le signal de réception (Se) au moins concernant la phase.

3. Dispositif selon la revendication 1 ou 2,
**caractérisé**
**en ce que** l'unité de régulation (11) évalue le signal d'excitation (Sa) au moins concernant la phase et/ou la fréquence.

4. Dispositif selon la revendication 2 ou 3,
**caractérisé**
**en ce que** l'unité de régulation (11) régule ou commande le filtre passe-tout au moins au moyen de la fréquence (fe) du signal de réception (Se), ainsi que de la phase du signal de réception (Se) et/ou de la fréquence et/ou de la phase du signal d'excitation (Sa).

5. Dispositif selon la revendication 1,
**caractérisé**
**en ce qu'**est prévu au moins un microcontrôleur (13) dans l'unité de régulation (11).
